# EUROPÄISCHE PATENTSCHRIFT

(11) **EP 0 984 878 B1**
(45) Veröffentlichungstag und Bekanntmachung des Hinweises auf die Patenterteilung: **13.12.2006**
(21) Anmeldenummer: 98947379.8
(22) Anmeldetag: 04.08.1998
(51) Int. Cl.: B60S 1/40

(54) **WISCHVORRICHTUNG FÜR SCHEIBEN VON KRAFTFAHRZEUGEN MIT EINEM AM KRAFTFAHRZEUG GEFÜHRTEN PENDELND ANGETRIEBENEN WISCHERARM**
WIPING DEVICE FOR WINDOWS OF MOTOR VEHICLES HAVING A WIPER ARM WHICH IS GUIDED ON THE VEHICLE AND DRIVEN IN A PENDULUM MANNER
SYSTEME D'ESSUIE-GLACE POUR VEHICULES A MOTEUR, COMPORTANT UN BRAS ENTRAINE DE FA ON OSCILLANTE ET GUIDE AU NIVEAU DU VEHICULE

(30) Priorität: 24.12.1997 DE 19757872
(43) Veröffentlichungstag der Anmeldung: 15.03.2000
(73) Patentinhaber: ROBERT BOSCH GMBH, 70442 Stuttgart (DE)
(72) Erfinder: KOTLARSKI, Thomas, D-77830 Buehlertal (DE)
(86) Internationale Anmeldenummer: PCT/DE1998/002224
(87) Internationale Veröffentlichungsnummer: WO 1999/033687

(56) Entgegenhaltungen:
- EP-A- 0 459 867
- EP-A- 0 791 514
- FR-A- 2 031 697
- FR-A- 2 254 959
- US-A- 4 445 249

## Beschreibung

### Stand der Technik

Bei bekannten Wischvorrichtungen der im Oberbegriff des Anspruchs 1 bezeichneten Art (EP-A-0 459 867) wirkt während der pendelnden Arbeitsbewegung eine erhebliche Zentrifugalkraft auf die Gelenkverbindung zwischen Wischerarm und Wischblatt ein, die insbesondere bei so genannten Einhebelwischanlagen - wegen des vergleichsweise großen und damit schweren Wischblatts - weiter erhöht wird. Diese Zentrifugalkraft muss von einem die Gelenkachse bildenden Stift und einer das Stiftlager bildenden haarnadelförmigen Krümmung des freien Wischerarmendes bzw. einer an diese Krümmung angepassten Haltefeder abgefangen werden. Da die Gelenkverbindung darüber hinaus noch Umwelteinflüssen, zum Beispiel Straßenschmutz, ausgesetzt ist, kann sie wegen der linienförmigen Abstützung des Stifts in der Krümmung ausschlagen, was dann das Wischergebnis beeinträchtigt, weil in diesem Gelenk die erforderliche Anpassung des Wischblatts an den Verlauf der sphärisch gekrümmten Scheibenoberfläche während des Wischbetriebs erfolgt.

### Vorteile der Erfindung

Bei dem erfindungsgemäßen Wischblatt mit den kennzeichnenden Merkmalen des Anspruchs 1 ist das Gelenk zwischen Wischerarm und Wischblatt während des Wischbetriebs vollständig entlastet, wobei bei sorgfältiger Abstimmung der Abfangschulter zur Stützschulter keine Zentrifugalkräfte auf das Gelenk einwirken können. Da die Abstützung an flächigen Schultern erfolgt, sind diese praktisch keiner Abnutzung unterworfen.

Aus fertigungstechnischen Gründen ist es von Vorteil, die wischerarmfeste Stützschulter am wischerarmseitigen Kupplungsteil und die wischblattseitige Abfangschulter am wischblattseitigen Kupplungsteil der Anschlußvorrichtung anzuordnen.

Eine kompakt bauende Wischvorrichtung ergibt sich, wenn die Stützschulter und die Abfangschulter zwischen der Pendelachse und der Gelenkachse angeordnet sind.

Eine besonders einfache Anordnung der Stütz- und Abfangschultern ist zu bewerkstelligen, wenn in Ausgestaltung der Erfindung das wischerarmseitige Kupplungsteil eine sich in einer auf der Scheibe stehenden Ebene befindliche, im wesentlichen in Richtung der Wischerarmlängsachse erstreckende Wand hat, der eine Oberfläche des wischblattseitigen Kupplungsteils benachbart ist und wenn weiter an der Wand die Stützschulter und an der Oberfläche die Abfangschulter ausgebildet sind.

Bei einer sehr niedrig bauenden Anschlußvorrichtung ist die Erfindung zu realisieren, wenn das wischerarmseitige Kupplungsteil quer zur Längsachse des Wischerarms einen U-förmigen Querschnitt aufweist, wenn weiter in den U-Schenkeln dieses Kupplungsteils je eine Lageraufnahme für einen Gelenkzapfen des wischblattseitigen Kupplungsteils angeordnet ist, welches zwischen die U-Schenkel des wischerarmseitigen Kupplungsteils eintaucht und wenn schließlich die Innenseite zumindest eines U-Schenkels die mit der Stützschulter versehene Wand bildet.

Dabei bildet zweckmäßig zumindest eine Fläche des Grundkörpers die mit der Abfangschulter versehene Oberfläche bildet.

Wenn sowohl die Stützschulter als auch die Abfangschulter einen um die Achse des Gelenks gekrümmten Verlauf haben und der jeweilige Krümmungsradius dem jeweiligen Abstand von der Gelenkachse entspricht, ergibt sich eine vergleichweise großflächige Anlage der beiden Schultern aneinander, was deren Verschleiß minimiert.

Eine weitere Verschleißminderung an den Schultern kann erreicht werden, wenn in einer Ausgestaltung der Erfindung, die Stützschulter an einem rippenartigen Vorsprung an der Innenseite eines U-Schenkels und die Abfangschulter an der Seitenwand einer Nut in der dem U-Schenkel zugewandten Oberfläche des Grundkörpers ausgebildet sind. Auf diese Weise befinden sich die Schultern innerhalb der Anschlußvorrichtung und sind somit gegen Straßenschmutz weitgehend geschützt.

Bei bestimmten Anwendungsfällen kann es von Vorteil sein, wenn an jedem der beiden Kupplungsteile mehrere Stützschultern und Abfangsschultern ausgebildet sind.

Fertigungstechnische Vorteile ergeben sich, wenn die beiden Kupplungsteile aus einem Kunststoff hergestellt sind.

Weitere vorteilhafte Weiterbildungen und Ausgestaltungen der Erfindung sind in der nachfolgenden Beschreibung von zwei in der dazugehörigen Zeichnung dargestellten Ausführungsbeispielen angegeben.

### Zeichnung

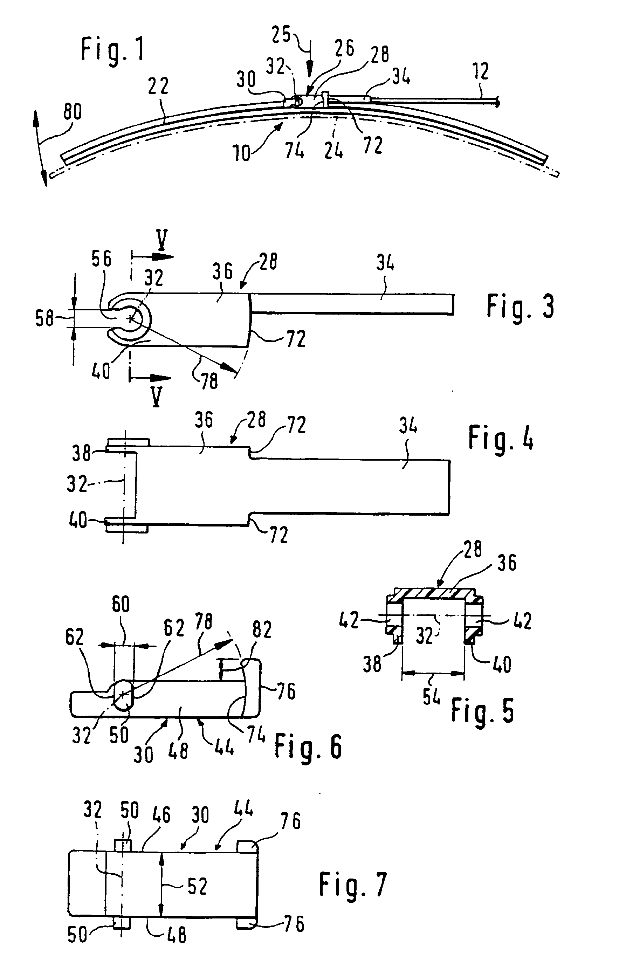

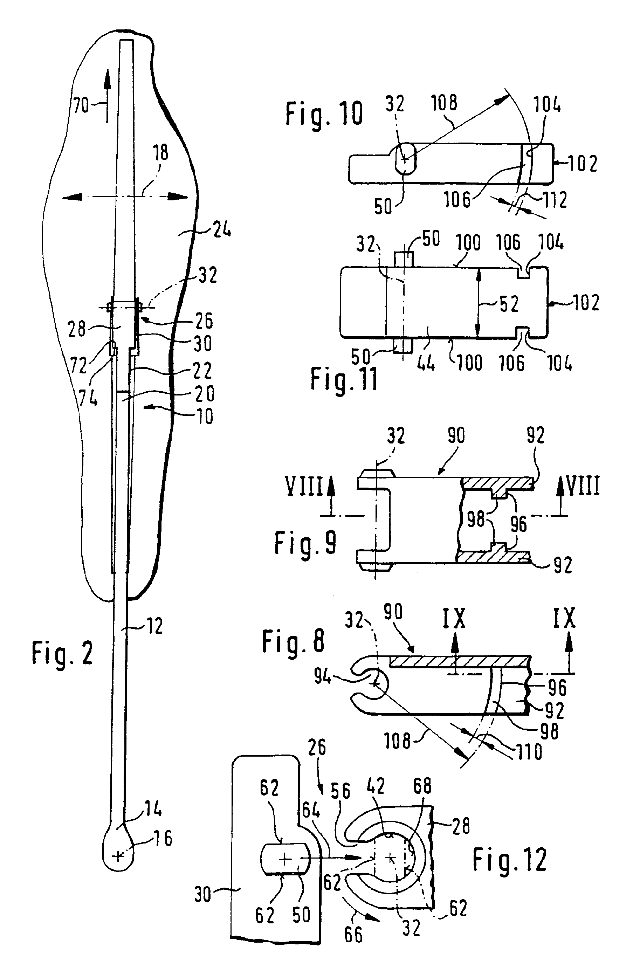

In der Zeichnung zeigen: Figur 1 eine erfindungsgemäße Wischvorrichtung in Seitenansicht, Figur 2 die Wischvorrichtung gemäß Figur 1 in Draufsicht, um 90° gedreht, Figur 3 eine Seitenansicht eines wischerarmseitigen Kupplungsteil in vergrößerter Darstellung, Figur 4 eine Draufsicht auf das Kupplungsteil gemäß Figur 3, Figur 5 die Schnittfläche eines Schnitts entlang der Linie V-V in Figur 3, Figur 6 eine Seitenansicht eines wischblattseitigen Kupplungsteils in vergrößerter Darstellung, Figur 7 eine Draufsicht auf das Kupplungsteil gemäß Figur 6, Figur 8 eine Teil-Seitenansicht einer anderen Ausführungsform des Kupplungsteils gemäß Figur 3, entlang der Linie VIII-VIII in Figur 9 geschnitten, Figur 9 eine Draufsicht auf das Kupplungsteil gemäß Figur 8 entlang der Linie IX-IX geschnitten, Figur 10 eine Seitenansicht einer anderen Ausführungsform des Kupplungsteils gemäß Figur 6, Figur 11 eine Draufsicht auf das Kupplungsteil gemäß Figur 10 und Figur 12 wischerarm- und wischblattseitige Kupplungsteile vor dem Anschließen des Wischblatts am Wischerarm in vergrößerter, unmaßstäblicher Darstellung.

### Beschreibung der Ausführungsbeispiele

Eine in den Figuren 1 und 2 dargestellte Wischvorrichtung 10 weist einen Wischerarm 12 auf, dessen eines Ende 14 an einer nicht dargestellten Kraftfahrzeugkarosserie um eine Pendelachse 16 pendelbar gelagert ist. An dem von der Pendelachse 16 abliegenden Ende 20 des Wischerarms 12 ist ein langgestrecktes Wischblatt 22 angelenkt, dessen Längserstreckung quer zur Pendelrichtung (Doppelpfeil 18) liegt. Das Wischblatt 22 ist an der zu wischenden Oberfläche einer zum Kraftfahrzeug gehörenden Windschutzscheibe 24 in Richtung des Pfeiles 25 angelegt. Die Verbindung zwischen dem Wischerarm 12 und dem Wischblatt 22 erfolgt über eine Anschlußvorrichtung 26, zu der ein wischerarmseitiges Kupplungsteil 28 und ein wischblattseitiges Kupplungsteil 30 gehören. Das Kupplungsteil 28 ist fest mit dem Wischerarm 12 und das Kupplungsteil 30 ist fest mit dem Wischblatt 22 verbunden. Die Gelenkverbindung zwischen dem Wischblatt 22 und dem Wischerarm 12 ist so getroffen, daß sich die Achse 32 des Gelenks im wesentlichen in Pendelrichtung (Doppelpfeil 18), d.h. quer zur Längserstreckung des Wischblatts 22 erstreckt. Die Ausgestaltung der Gelenkmittel einer ersten Ausführungsform gemäß den Figuren 1 und 2 wird im folgenden anhand der Figuren 3 bis 7 näher erläutert.

Das in den Figuren 3 und 4 dargestellte wischerarmseitige Kupplungsteil 28 weist einen Haltearm 34 auf, der zur festen Verbindung des Kupplungsteils 28 mit dem Wischerarm 12 dient. An den Haltearm 34 schließt sich ein im Querschnitt U-förmiges Gelenkstück 36 an. In jedem der beiden U-Schenkel 38 und 40 ist eine Lageraufnahme 42 angeordnet. Das andere, wischblattseitige Kupplungsteil 30 ist in den Figuren 6 und 7 dargestellt. Es weist einen im wesentlichen blockartigen Grundkörper 44 mit zwei zueinander parallelen Seiten-Oberflächen 46 und 48 auf, aus denen die beiden Enden 50 eines in den Grundkörper 44 gedanklich integrierten Gelenkzapfens ragen. Die Längsachse dieses Gelenkzapfens - bzw. die beiden miteinander fluchtenden Längsachsen der Zapfen 50 - entspricht der Achse 32 des Gelenks gemäß Figur 2. Der Abstand 52 der beiden Seiten-Oberflächen 46 und 48 des Grundkörpers 44 voneinander ist so auf das Abstandsmaß 54 (Figur 5) zwischen den U-Schenkeln 38, 40 des Kupplungsteils 28 abgestimmt, daß der Grundkörper 44 möglichst spiellos jedoch leichtgängig zwischen die U-Schenkel 38 und 40 eintauchen kann. Dies ist dann der Fall, wenn das Wischblatt 22 an dem Wischerarm 12 angelenkt ist. Dann nämlich befinden sich die beiden Zapfenenden 50 in ihren Lageraufnahmen 42 des wischerarmseitigen Kupplungsteils 28. Da die Lageraufnahmen 42 in den beiden U-Schenkeln 38 und 40 miteinander fluchten, entspricht die gemeinsame Lagerachse der beiden Lageraufnahmen 42 ebenfalls der Achse 32 des Gelenks.

Damit die beiden auf einem Kunststoff hergestellten Kupplungsteile 28 und 30, d.h. der Wischerarm 12 und das Wischblatt 22 gelenkig, aber unverlierbar miteinander verbunden werden können, sind in den U-Schenkeln 38 und 40 des Kupplungsteils 28 die bohrungsähnlichen Lageraufnahmen 42 je über eine schlitzartige Öffnung 56 randoffen. Diese Öffnungsschlitze liegen im wesentlichen parallel zur Oberfläche der zu wischenden Scheibe 24 und sind von der Pendelachse 16 nach außen weggerichtet. Die Breite 58 der Öffnungen 56 ist so auf ein Abstandsmaß 60 zwischen zur Scheibe 24 gerichteten Anflachungen 62 der Zapfenenden 50 abgestimmt, daß die Zapfenenden 50 über die beiden ihnen jeweils zugeordneten Öffnungen 56 in ihre Lageraufnahmen 42 eingeführt werden können, wenn die Anflachungen 62 auf die Öffnungserstreckungen ausgerichtet sind. Diese Anordnung, welche auch die Montageposition zeigt ist in Figur 12 vergrößert dargestellt. Die Arbeitsschritte zum Anschließen des Wischblatts 22 an den Wischerarm 12 wird anhand dieser Figur näher erläutert. Dort sind die beiden Kupplungsteile 28 und 30 mit ausgezogenen Linien dargestellt. Zum Anschließen des Wischblatts 22 an den Wischerarm 12 wird das Wischblatt in eine Position gebracht, in welcher die Anflachungen 62 der Zapfenenden 50 sich in Verlängerung der Öffnungen 56 befinden (Figur 12). Danach werden die beiden Zapfenenden 50 in ihre Lageraufnahmen 42 eingebracht, in dem das Wischblatt in Richtung des Pfeilses 64 zum wischerarmseitigen Kupplungsteil 28 bewegt wird. Wenn sich die beiden Zapfenenden 50 vollständig in ihren Lageraufnahmen 42 befinden, wird das Wischblatt 22 in Richtung des Pfeiles 66 gedreht, bis die Anflachungen 62 in die in Figur 12 strichpunktiert dargestellte Position gelangen, in welcher sie zur Scheibe 24 ausgerichtet sind. Figur 12 zeigt, daß die Anflachungen 62 innerhalb einer gedachten Mantelfläche 68 liegen, die in Figur 12 durch die Wand der Lageraufnahmen 42 dargestellt ist. Es ist ersichtlich, daß in dieser strichpunktert dargestellten Betriebsposition der Anschlußvorrichtung 26 ein Entfernen des Wischblatts 22 vom Wischerarm 12 nicht mehr möglich ist. Da das Wischblatt während des Wischbetriebs an der zu wischenden Scheibe 24 anliegt, kann das Wischblatt auch nicht unbeabsichtigt entgegen dem Richtungspfeil 66 verschwenkt werden, so daß ein Lösen der Anschlußverbindung möglich wäre. Es ergibt sich somit ein zuverlässiger Steck-Drehverschluß, der auf einfache Weise auch wieder gelöst werden kann, indem das entgegen dem Richtungspfeil 25 von der Scheibe abgehobene Wischblatt 22 entgegen der Richtung des Pfeils 66 etwa um 90° geschwenkt wird. Danach ist ein Herausführen der Zapfenenden 50 durch die Öffnungen 56 der Lageraufnahmen 42 möglich.

Damit während des Wischbetriebs die vom Wischblatt 22 ausgehende Zentrifugalkraft (Pfeil 70, Figur 2) nicht auf das Gelenk 32, 42, 50 einwirken kann, hat die Wischvorrichtung eine wischerarmfeste, zur Pendelachse 16 weisende Stützschulter, der eine wischblattfeste, von der Pendelachse 16 weg weisende Abfangschulter zugeordnet ist.

Beim Ausführungsbeispiel gemäß den Figuren 3 bis 7 ist je eine Stützschulter 72 an den freiliegenden Endkanten der U-Schenkel 38 und 40 des Gelenkstücks 36 ausgebildet. Die wischblattseitigen Abfangsschultern 74 befinden sich an seitlichen Vorsprüngen 76 des Grundkörpers 44, die aus den Seitenoberflächen 46 und 48 ragen. Sowohl die Stützschultern 72 als auch die beiden Abfangschultern 74 haben einen um die Achse 32 des Gelenks gekrümmten Verlauf, wobei der jeweilige Krümmungsradius 78 dem jeweiligen Abstand von der Gelenkachse 32 entspricht. Dabei sind die Krümmungsradien 78 so aufeinander abgestimmt, daß bei in Betriebsposition befindlicher Wischvorrichtung (Figur 1) die Stützschultern 72 bei entlastetem Gelenk 42, 50 an den Abfangschultern 74 anliegen, damit in dieser Betriebsposition das Gelenk zwischen Wischerarm und Wischblatt spielfrei und leichtgängig bleibt. Wenn nun während des Wischbetriebs Zentrifugalkräfte (Pfeil 70 in Figur 2) auf das Gelenk 32, 42, 50 einzuwirken versuchen, werden diese durch die Stützschultern 72 und die diesen zugeordneten Abfangschultern 74 so abgefangen, daß das Gelenk 32 davon nicht betroffen wird.

Da während des Wischbetriebs das Wischblatt in seiner Längserstreckung dem Verlauf der sphärisch gekrümmten Windschutzscheibe folgen muß, der Wischerarm jedoch um seine Pendelachse 16 pendelt, ergibt sich eine stetige Schwingbewegung (Pfeil 80 in Figur 1) des Wischblatts 22 gegenüber dem Wischerarm 12 um die Achse 32 des Gelenks. Damit auch in den Schwing-Umkehrstellungen noch ein Zusammenwirken der Stützschulter 72 mit der Abfangschulter 74 gewährleistet ist, ragen die Vorsprünge 76 mit der Abfangschulter 74 um ein Maß 82 (Figur 6) über den blockartigen Grundkörper 44 des wischblattfesten Kupplungsteils 30 hinaus.

Anhand der Figuren 8 bis 11 soll nun eine zweite Ausführungsform der Erfindung beschrieben werden. Das wischerarmfeste Kupplungsteil 90 entspricht im wesentlichen dem schon beschriebenen wischerarmfesten Kupplungsteil 28. Es hat also ebenfalls einen U-förmigen Aufbau mit U-Schenkeln 92, in denen Lageraufnahmen 94 angeordnet sind, welche den Lageraufnahmen 42 im Kupplungsteil 28 entsprechen. Abweichend von dem schon beschriebenen Ausführungsbeispiel sind die Stützschultern 96 bei dieser Ausführungsform der Erfindung an rippenartigen Vorsprüngen 98 ausgebildet, welche an den einander zugewandten Innenseiten der U-Schenkel 92 vorhanden sind. In den voneinander abgewandten Seiten-Oberflächen 100 des ebenfalls einen Grundkörper 44 aufweisenden wischblattfesten Kupplungsteils 102 - dessen Aufbau im wesentlichen dem Aufbau des wischblattfesten Kupplungsteils 30 entspricht - sind die von der Pendelachse 16 weg weisenden Abfangschultern 104 an den Seitenwänden von Nuten 106 ausgebildet, welche in den Seitenflächen 100 des wischblattfesten Kupplungsteils 102 angeordnet sind. Auch bei dieser Ausführungsform haben sowohl die Stützschultern 96 als auch die Abfangschultern 104 einen um die Achse 32 des Gelenks gekrümmten Verlauf, wobei die Radien 108 der Stützschultern 96 und der Abfangschultern 104 einander entsprechen. Weiter entspricht die Breite 110 der rippenartigen Vorsprünge 98 der Breite 112 der Nuten 106. Somit ergibt sich ein Zusammenwirken der Stütz- und Abfangschultern im Betrieb der Wischvorrichtung 10, so wie dies anhand des ersten Ausführungsbeispiels der Erfindung dargelegt worden ist.

Betrachtet man die Figuren 3 bis 7 und 8 bis 10 unter Berücksichtigung der vorstehenden Erläuterungen zusammen mit der Figur 2 ergibt sich, daß die Stützschultern 72 bzw. 96 und die diesen zugeordneten Abfangschultern 74 bzw. 104 bei montierter Wischvorrichtung 10 zwischen der Pendelachse 16 und der Achse 32 des Gelenks 42, 50 angeordnet sind. Weiter ist dann auch klar, daß die wischerarmseitigen Kupplungsteile 28 bzw. 90 sich in auf der Scheibe 24 stehenden Ebenen befindliche, im wesentlichen sich in Richtung der Wischerarmlängsachse erstreckende Wände 38, 40 bzw. 92 haben, denen jeweils eine Oberfläche 46, 48 bzw. 100 des wischblattseitigen Kupplungsteils 44 bzw. 102 benachbart ist, wobei an den Wänden die Stützschulter und an den Oberflächen die Abfangschulter ausgebildet ist.

In Betriebsposition der Wischvorrichtung liegen auch bei dieser Ausführungsform Stützschultern 96 des wischerarmfesten Kupplungsteils 90 an den Abfangschultern 104 des wischblattfesten Kupplungsteils 102 an, so daß die Zapfenenden 50 von den durch das Wischblatt 22 hervorgerufenen Zentrifugalkräften (Pfeil 70) entlastet ist.

Beiden Ausführungsbeispielen ist gemeinsam, daß die Wischvorrichtung 10 über wenigstens eine wischerarmfeste, zur Pendelachse 16 weisende Stützschulter 72 bzw. 96 hat, der eine wischblattfeste, von der Pendelachse 16 wegweisende Abfangschulter 74 bzw. 104 zugeordnet ist.

## Patentansprüche

1. Wischvorrichtung für Scheiben von Kraftfahrzeugen mit einem am Kraftfahrzeug geführten, pendelnd angetriebenen Wischerarm (12) an dessen freien, von der Pendelachse (16) abliegenden Ende ein quer zur Pendelrichtung (Pfeil 18) langgestrecktes, an der Scheibe (24) anlegbares Wischblatt (22) über eine wischerarmseitige und wischblattseitige Kupplungsteile aufweisende Anschlussvorrichtung (26) lösbar angelenkt ist, wobei sich die Gelenkachse (32) im wesentlichen in Pendelrichtung erstreckt, und wobei wenigstens eine wischerarmfeste, zur Pendelachse (16) weisende Stützschulter (72, 96) einer wischblattfesten, von der Pendelachse (16) weg weisenden Abfangschulter (74, 104) zugeordnet ist, und das wischblattseitige Kupplungsteil (30, 102) ein separates, mit dem Wischblatt verbundenes Teil ist, wobei das wischblattseitige Kupplungsteil (30, 102) einen im wesentlichen blockartigen Grundkörper (44) mit zwei zueinander parallelen Seiten-Oberflächen (46, 48) aufweist, **dadurch gekennzeichnet, dass** aus den Seiten-Oberflächen (46, 48) zwei Enden eines in den Grundkörper (44) gedanklich integrierten Gelenkzapfens ragen.

2. Wischvorrichtung nach Anspruch 1, **dadurch gekennzeichnet, daß** die wischerarmfeste Stützschulter (72 bzw. 96) am wischerarmseitigen Kupplungsteil (28 bzw. 90) und die wischblattseitige Abfangschulter (74 bzw. 104) am wischblattseitigen Kupplungsteil (30 bzw. 102) der Anschlußvorrichtung (26) angeordnet sind.

3. Wischvorrichtung nach einem der Ansprüche 1 oder 2, **dadurch gekennzeichnet, daß** die Stützschulter (72 bzw. 96) und die Abfangschulter (74 bzw. 104) zwischen der Pendelachse (16) und der Gelenkachse (32) angeordnet sind.

4. Wischvorrichtung nach einem der Ansprüche 2 oder 3, **dadurch gekennzeichnet, daß** das wischerarmseitige Kupplungsteil (28 bzw. 90) eine sich in einer auf der Scheibe (24) stehenden Ebene befindliche, im wesentlichen in Richtung der Wischerarmlängsachse erstreckende Wand (38, 40 bzw. 92)hat, der eine Oberfläche (46, 48 bzw. 100) des wischblattseitigen Kupplungsteils (44 bzw. 102) benachbart ist und daß an der Wand die Stützschulter (72 bzw. 96) und an der Oberfläche die Abfangschulter (74 bzw. 104) ausgebildet sind.

5. Wischvorrichtung nach Anspruch 4, **dadurch gekennzeichnet, daß** das wischerarmseitige Kupplungsteil (28 bzw. 90) quer zur Längsachse des Wischerarms (12) einen U-förmigen Querschnitt aufweist, daß in den U-Schenkeln (38, 40 bzw. 92) dieses Kupplungsteils je eine Lageraufnahme (42 bzw. 94) für einen Gelenkzapfen (50) des wischblattseitigen Kupplungsteils (44 bzw. 102) angeordnet ist, welches zwischen die U-Schenkel (38, 40 bzw 92) des wischerarmseitigen Kupplungsteils (28 bzw. 90) eintaucht und daß die Innenseite zumindest eines U-Schenkels (92) die mit der Stützschulter (96) versehene Wand bildet.

6. Wischvorrichtung nach einem der Ansprüche 4 oder 5, **dadurch gekennzeichnet, dass** zumindest eine Fläche (46, 48) des Grundkörpers (44) die mit der Abfangschulter (74) versehene Oberfläche bildet.

7. Wischvorrichtung nach einem der Ansprüche 1 bis 6, **dadurch gekennzeichnet, daß** sowohl die Stützschulter (72 bzw. 96) als auch die Abfangschulter (74 bzw. 104) einen um die Achse (32) des Gelenks gekrümmten Verlauf haben und daß der jeweilige Krümmungsradius (78) dem jeweiligen Abstand von der Gelenkachse (32) entspricht.

8. Wischvorrichtung nach einem der Ansprüche 6 oder 7, **dadurch gekennzeichnet, daß** die Stützschulter (96) an einem rippenartigen Vorsprung (98) an der Innenseite eines U-Schenkels (92) und die Abfangschulter (104) an der Seitenwand einer Nut (106) in der dem U-Schenkel (92) zugewandten Oberfläche des Grundkörpers (44) ausgebildet sind.

9. Wischvorrichtung nach einem der Ansprüche 2 bis 8, **dadurch gekennzeichnet, daß** an jedem der beiden Kupplungsteile (28, 30 bzw. 90 und 102) mehrere Stützschultern und Abfangschultern ausgebildet sind.

10. Wischvorrichtung nach einem der Ansprüche 1 bis 9, **dadurch gekennzeichnet, daß** die beiden Kupplungsteile (28, 30 bzw. 90, 102) aus einem Kunststoff gefertigt sind.

11. Wischvorrichtung nach Anspruch 1, **dadurch gekennzeichnet, daß** die Kupplungsteile (28 bzw. 90; 30 bzw. 102) von der Pendelachse (16) nach außen weggerichtet voneinander lösbar sind.

12. Wischvorrichtung nach Anspruch 11, **dadurch gekennzeichnet, daß** bohrungsähnliche Lageraufnahmen (42) am wischarmseitigen Kupplungsteil (28 bzw. 90) nach außen, von der Pendelachse (16) weggerichtete Öffnungsschlitze (56) aufweisen, in welche Lagerzapfen (50) des wischblattseitigen Kupplungsteiles (30 bzw. 102) mit Anflachungen (62) eingeführt sind.

## Claims

1. Wiper device for windows of motor vehicles, having a wiper arm (12), which is guided on the motor vehicle and is driven in an oscillating manner and to the free end of which, which is remote from the oscillation axis (16), a wiper blade (22), which is elongate transversely with respect to the direction of oscillation (arrow 18) and can be placed against the window (24), is coupled releasably via a connecting device (26) having wiper-arm-side and wiper-blade-side coupling parts, the axis of articulation (32) extending essentially in the direction of oscillation, and at least one supporting shoulder (72, 96), which is fixed on the wiper arm and points towards the oscillation axis (16) being assigned to an intercepting shoulder (74, 104) which is fixed on the wiper blade and points away from the oscillation axis (16), and the wiper-blade-side coupling part (30, 10) being a separate part which is connected to the wiper blade, the wiper-blade-side coupling part (30, 102) having an essentially block-like basic body (44) with two side surfaces (46, 48) which are parallel to each other, **characterized in that** two ends of a pivot intellectually integrated in the basic body (44) protrude from the side surfaces (46, 48).

2. Wiper device according to Claim 1, **characterized in that** the supporting shoulder (72 or 96), which is fixed on the wiper arm, is arranged on the wiper-arm-side coupling part (28 or 90) and the wiper-blade-side intercepting shoulder (74 or 104) is arranged on the wiper-blade-side coupling part (30 or 102) of the connecting device (26).

3. Wiper device according to either of Claims 1 and 2, **characterized in that** the supporting shoulder (72 or 96) and the intercepting shoulder (74 or 104) are arranged between the oscillation axis (16) and the axis of articulation (32).

4. Wiper device according to either of Claims 2 and 3, **characterized in that** the wiper-arm-side coupling part (28 or 90) has a wall (38, 40 or 92) which is situated in a plane perpendicular to the window (24), extends essentially in the direction of the longitudinal axis of the wiper arm and has adjacent to it a surface (46, 48 or 100) of the wiper-blade-side coupling part (44 or 102), and **in that** the supporting shoulder (72 or 96) is formed on the wall and the intercepting shoulder (74 or 104) is formed on the surface.

5. Wiper device according to Claim 4, **characterized in that** the wiper-arm-side coupling part (28 or 90) has a U-shaped cross section transversely with respect to the longitudinal axis of the wiper arm (12), **in that** a respective bearing receptacle (42 or 94) for a pivot (50) of the wiper-blade-side coupling part (44 or 102) is arranged in the U limbs (38, 40 or 92) of this coupling part, the said coupling part dipping between the U limbs (38, 40 or 92) of the wiper-arm-side coupling part (28 or 90), and **in that** the inside of at least one U limb (92) forms the wall which is provided with the supporting shoulder (96).

6. Wiper device according to either of Claims 4 and 5, **characterized in that** at least one surface (46, 48) of the basic body (44) forms the surface which is provided with the intercepting shoulder (74).

7. Wiper device according to one of Claims 1 to 6, **characterized in that** both the supporting shoulder (72 or 96) and the intercepting shoulder (74 or 104) have a profile which is curved about the axis (32) of the joint, and **in that** the particular radius of curvature (78) corresponds to the particular distance from the axis of articulation (32).

8. Wiper device according to either of Claims 6 and 7, **characterized in that** the supporting shoulder (96) is formed on a rib-like projection (98) on the inside of a U-limb (92) and the intercepting shoulder (104) is formed on the side wall of a groove (106) **in that** surface of the basic body (44) which faces the U-limb (92).

9. Wiper device according to one of Claims 2 to 8, **characterized in that** a plurality of supporting shoulders and intercepting shoulders are formed on each of the two coupling elements (28, 30 or 90 and 102).

10. Wiper device according to one of Claims 1 to 9, **characterized in that** the two coupling parts (28, 30 or 90, 102) are manufactured from a plastic.

11. Wiper device according to Claim 1 **characterized in that** the coupling parts (28 or 90; 30 or 102) can be detached from each other in a manner directed to the outside away from the oscillation axis (16).

12. Wiper device according to Claim 11, **characterized in that** bore-like bearing receptacles (42), on the wiper-arm-side coupling part (28 or 90) have opening slots (56) which are directed to the outside away from the oscillation axis (16) and into which journals (50) of the wiper-blade-side coupling part (30 or 102) can be introduced with flattened sections (62).

## Revendications

1. Dispositif d'essuyage pour vitres de véhicules automobiles comportant un bras d'essuie-glace (12) entraîné suivant un mouvement pendulaire, guidé au niveau du véhicule automobile et dont l'extrémité libre à l'opposé de l'axe de mouvement pendulaire (16) comporte un balai d'essuie-glace (22) relié de manière articulée, amovible, et s'appliquant contre la vitre (24), ce balai, allongé transversalement à la direction du mouvement pendulaire (flèche 18) étant relié par un dispositif d'accouplement (26) comprenant une pièce d'accouplement côté bras d'essuie-glace et une pièce d'accouplement côté balai d'essuie-glace,
l'axe d'articulation (32) s'étendant principalement dans la direction du mouvement pendulaire, et dans lequel
au moins un épaulement d'appui (72, 96) tourné vers l'axe de mouvement pendulaire (16), solidaire du bras d'essuie-glace est associé à un épaulement de réception (74, 104) solidaire du balai d'essuie-glace et non tourné vers l'axe de mouvement pendulaire (16), et
la pièce d'accouplement (30, 102) située du côté du balai d'essuie-glace est une pièce distincte, reliée au balai d'essuie-glace, cette pièce d'accouplement (30, 102) côté balai d'essuie-glace ayant un corps de base (44) principalement en forme de bloc avec deux faces latérales (46, 48) parallèles,
**caractérisé en ce que**
les deux extrémités d'un goujon d'articulation intégré fictivement dans le corps de base (44) sont en saillie des faces latérales (46, 48).

2. Dispositif d'essuyage selon la revendication 1,
**caractérisé en ce que**
dans le dispositif d'accouplement (26) l'épaulement d'appui (72, 96) solidaire du bras d'essuie-glace est prévu sur la pièce d'accouplement (28, 90) côté bras d'essuie-glace, et l'épaulement de réception (74, 104) côté balai d'essuie-glace est prévu sur la pièce d'accouplement (30, 102) côté balai d'essuie-glace.

3. Dispositif d'essuyage selon l'une revendications 1 ou 2,
**caractérisé en ce que**
l'épaulement d'appui (72, 96) et l'épaulement de réception (74, 104) sont prévus entre l'axe de mouvement pendulaire (16) et l'axe d'articulation (32).

4. Dispositif d'essuyage selon l'une des revendications 2 ou 3,
**caractérisé en ce que**
la pièce d'accouplement (28, 90) côté bras d'essuie-glace possède une paroi (38, 40, 92) s'étendant principalement dans la direction de l'axe longitudinal du bras d'essuie-glace, dans un plan perpendiculaire à la vitre (24), la paroi étant voisine de la surface (46, 48, 100) de la pièce d'accouplement (44, 102) côté balai d'essuie-glace, et les épaulements d'appui (72, 96) sont réalisés sur la paroi alors que l'épaulement de réception (74, 104) est réalisé à la surface.

5. Dispositif d'essuyage selon la revendication 4,
**caractérisé en ce que**
la pièce d'accouplement (28, 90) côté bras d'essuie-glace présente une section en forme de U transversalement à l'axe longitudinal du bras d'essuie-glace (12),
les branches en U (38, 40, 92) de cette pièce d'accouplement ont chacune un logement de palier (42, 94) pour un goujon d'articulation (50) de la pièce d'accouplement (44, 102) côté balai d'essuie-glace, qui pénètre entre les branches en U (38, 40, 92) de la pièce d'accouplement (28, 90) côté bras d'essuie-glace et **en ce que** le côté intérieur d'au moins une branche en U (92) forme la paroi munie de l'épaulement d'appui (96).

6. Dispositif d'essuyage selon l'une des revendications 4 ou 5,
**caractérisé en ce qu'**
au moins une surface (46, 48) du corps de base (44) forme la surface munie de l'épaulement de réception (74).

7. Dispositif d'essuyage selon l'une des revendications 1 à 6,
**caractérisé en ce qu'**
à la fois l'épaulement de support (72, 96) et l'épaulement de réception (74, 104) ont un tracé courbe autour de l'axe (32) de l'articulation et le rayon de courbure (72) respectif correspond à la distance de l'axe d'articulation (32).

8. Dispositif d'essuyage selon l'une des revendications 6 ou 7,
**caractérisé en ce que**
l'épaulement d'appui (96) est prévu sur une saillie (98) en forme de nervure du côté intérieur d'une branche en U (92) et l'épaulement de réception (104) est prévu sur la paroi latérale d'une rainure (106) dans la surface du corps de base (44) tournée vers la branche en U (92).

9. Dispositif d'essuyage selon l'une des revendications 2 à 8,
**caractérisé en ce que**
chacune des pièces d'accouplement (28, 30 ou 90 et 102) comporte plusieurs épaulements d'appui et épaulements de réception.

10. Dispositif d'essuyage selon l'une des revendications 1 à 9,
**caractérisé en ce que**
les deux pièces d'accouplement (28, 30 ou 90, 102) sont en matière plastique.

11. Dispositif d'essuyage selon la revendication 1,
**caractérisé en ce que**
les pièces d'accouplement (28 ou 90 ; 30 ou 102) sont détachables de l'axe de mouvement pendulaire (16) en s'écartant vers l'extérieur.

12. Dispositif d'essuyage selon la revendication 11,
**caractérisé en ce que**
des logements de palier (42) analogues à des perçages de la pièce d'accouplement (28, 90) du côté du bras d'essuie-glace, comportent des fentes d'ouverture (56) qui s'écartent vers l'extérieur de l'axe de mouvement pendulaire (16) et reçoivent des tourillons de palier (50) de la pièce d'accouplement (30 ou 102), côté balai d'essuie-glace, munis de méplats (62).
